# EUROPEAN PATENT SPECIFICATION

(11) **EP 3 270 485 B1**
(45) Date of publication and mention of the grant of the patent: **29.12.2021**
(21) Application number: 16761335.5
(22) Date of filing: 05.01.2016
(51) Int. Cl.: H01M 10/44, H02J 7/00, H01M 10/617

(54) **POWER STORAGE SYSTEM**
LEISTUNGSSPEICHERSYSTEM
SYSTÈME DE STOCKAGE D'ÉNERGIE

(30) Priority: 09.03.2015 JP 2015045815
(43) Date of publication of application: 17.01.2018
(73) Proprietor: FDK Corporation, Tokyo 108-8212 (JP)
(72) Inventor: KUMAMOTO, Kiyotaka, Tokyo 108-8212 (JP); SAITO, Yosuke, Tokyo 108-8212 (JP); HANAKAWA, Kenji, Tokyo 108-8212 (JP); YAMASAKI, Mitsuhiko, Tokyo 108-8212 (JP); OGAWA, Yusuke, Tokyo 108-8212 (JP)
(74) Representative: Epping - Hermann - Fischer
(86) International application number: PCT/JP2016/050082
(87) International publication number: WO 2016/143363

(56) References cited:
- WO-A1-2014/136705
- JP-A- H10 334 951
- JP-A- 2006 246 595
- JP-A- 2006 246 595
- JP-A- 2008 218 272
- JP-A- 2012 010 502
- JP-A- 2013 160 652
- JP-A- 2014 171 335
- US-A- 5 357 187

## Description

### Technical Field

The present invention relates to a power storage system using a plurality of storage batteries.

### Background Art

As means for performing electric power supply in blackout and power peak cut, a power storage system is used.

Document JP 2006 246595 A discloses a secondary battery pack to enable charging of a plurality of secondary batteries or battery blocks being connected in parallel and used as a power supply of a high current load. The secondary battery pack comprises a discharge circuit formed by connecting a plurality of secondary battery blocks in parallel, a plurality of switches interposed between a charging power supply and the plurality of secondary battery blocks to form a charging path for each secondary battery block and means for detecting full-charge of each secondary battery block when it is charged.

In document JP H10 334951 A a lithium ion secondary battery is described, in which battery temperature can be adjusted and over charging and over discharging can be prevented. Therefore, battery groups used for charging and discharging are alternately arranged, and the battery capacities of the battery groups are controlled, so as to be 20 to 80%. When the SOC of the battery group used for charging exceeds 80% or the SOC of the battery group used for discharging falls below 20% among the battery group A and the battery group B, the battery group for charging and the battery group for discharging are switched mutually. The power storage system generally charges an aggregate of storage batteries whose number is in accordance with a desired power amount with electric power from a commercial power supply and/or natural energy, and supplies the electric power to a load as needed. Since chemical reactions in charging and discharging the storage batteries generate heat, the temperature of the storage batteries is to rise in operation of the power storage system. The storage batteries and other components in the power storage system can result in reduction of life and deterioration of charge/discharge characteristics due to the temperature elevation. Therefore, the storage batteries of the power storage system need measures against heat generation, in which a cooling device such as an air cooling device and a water cooling device is often included. For example, Patent Document 1 discloses an invention for cooling storage batteries with an air blower included in a power storage system in accordance with the extent of heat generation of each storage battery.

### Prior Art Document

### Patent Document

Patent Document 1: Japanese Patent Laid-Open No. 2014-232600

### Summary of the Invention

### Problems to be solved by the Invention

However, in the conventional art disclosed in Patent Document 1 above, the cooling device has to be included in the power storage system, which causes power consumption due to operation of the cooling device. In particular, in a power storage system having storage batteries disposed at high density, the individual storage batteries are affected by their own heat generation, and in addition, heat generation of adjacent storage batteries. Hence, a possibility of reduction of life and deterioration of charge/discharge characteristics of the storage batteries caused by the heat generation rises.

The present invention is devised in view of such circumstances, and an object thereof is to provide a power storage system which can suppress reduction of life and deterioration of charge/discharge characteristics of storage batteries.

### Means for Solving the Problems

The invention is defined by the appended claims.

### <First Aspect which does not fall under the scope of the Present Invention>

There is provided a power storage system according to a first aspect, including: a plurality of power storage sections parallelly disposed; charge/discharge sections that individually charge/discharge the plurality of power storage sections; and a control section that controls the charge/discharge sections, wherein the control section controls the charge/discharge sections such that power storage sections adjacent to one another in a vertical, horizontal and front-rear directions are not simultaneously charged.

Since the plurality of power storage sections are charged such that the power storage sections adjacent to one another in the vertical, horizontal and front-rear directions are not simultaneously charged, temperature elevation due to heat generation of the adjacent power storage sections can be suppressed. Thereby, reduction of life and deterioration of charge/discharge characteristics of storage batteries caused by the heat generation can be suppressed.

In this way, according to the first aspect of the present invention, an effect that a power storage system which can suppress reduction of life and deterioration of charge/discharge characteristics of storage batteries can be provided can be achieved. Moreover, according to the first aspect, an effect that peak consumption power in charging can be reduced since all the plurality of power storage sections are not simultaneously charged can also be achieved.

### <Second Aspect of the Present Invention>

In the aforementioned first aspect, there is provided a power storage system according to a second aspect of the present invention, wherein the control section charges the plurality of power storage sections by repeating control of selectively and sequentially charging a plurality of power storage section groups, the plurality of power storage sections being partitioned into the plurality of power storage section groups each composed of power storage sections not adjacent to one another in the vertical, horizontal or front-rear direction.

For the plurality of power storage section groups, all the power storage sections are charged by selectively and sequentially switching the power storage section groups to be charged. In other words, the power storage sections belonging to the same group are simultaneously charged, and the power storage sections belonging to different groups are not simultaneously charged. Further, each power storage section group of the plurality of power storage section groups is composed of the power storage sections not adjacent to one another in the vertical, horizontal or front-rear direction. Therefore, the plurality of power storage sections are to be charged such that the power storage sections adjacent to one another in the vertical, horizontal and front-rear directions are not simultaneously charged.

Therefore, according to the second aspect of the present invention, similarly to the first aspect of the present invention, since temperature elevation of the power storage sections due to heat generation of the adjacent power storage sections can be suppressed, reduction of life and deterioration of charge/discharge characteristics of storage batteries caused by heat generation can be suppressed. Moreover, according to the second aspect of the present invention, similarly to the first aspect of the present invention, an effect that peak consumption power in charging can be reduced since all the plurality of power storage sections are not simultaneously charged can be achieved. Furthermore, according to the second aspect of the present invention, since for the plurality of power storage section groups, all the power storage sections are to be evenly charged by selectively and sequentially switching the power storage section groups to be charged, specific power storage sections do not only result in convergent heat generation, which can further effectively suppress temperature elevation of the power storage sections.

### <Third Aspect which does not fall under the scope of the Present Invention>

There is provided a power storage system according to a third aspect, including: a plurality of power storage sections parallelly disposed; charge/discharge sections that individually charge/discharge the plurality of power storage sections; and a control section that controls the charge/discharge sections, wherein the control section controls the charge/discharge sections such that power storage sections adjacent to one another in a vertical, horizontal and front-rear directions are not simultaneously discharged.

Since the plurality of power storage sections are discharged such that the power storage section adjacent to one another in the vertical, horizontal and front-rear directions are not simultaneously discharged, temperature elevation of the power storage sections due to heat generation of the adjacent power storage sections can be suppressed. Thereby, reduction of life and deterioration of charge/discharge characteristics of the power storage sections caused by heat generation can be suppressed. Therefore, according to the third aspect, an effect that a power storage system which can suppress reduction of life and deterioration of charge/discharge characteristics of storage batteries can be provided can be achieved.

### <Fourth Aspect of the Present Invention>

In the aforementioned third aspect, there is provided a power storage system according to a fourth aspect of the present invention, wherein the control section discharges the plurality of power storage sections by repeating control of selectively and sequentially discharging a plurality of power storage section groups, the plurality of power storage sections being partitioned into the plurality of power storage section groups each composed of power storage sections not adjacent to one another in the vertical, horizontal or front-rear direction.

For the plurality of power storage section groups, all the power storage sections are discharged by selectively and sequentially switching the power storage section groups to be discharged. In other words, the power storage sections belonging to the same group are simultaneously discharged, and the power storage sections belonging to different groups are not simultaneously discharged. Further, each power storage section group of the plurality of power storage section groups is composed of the power storage sections not adjacent to one another in the vertical, horizontal or front-rear direction. Therefore, the plurality of power storage sections are to be discharged such that the power storage sections adjacent to one another in the vertical, horizontal and front-rear directions are not simultaneously discharged.

Therefore, according to the fourth aspect of the present invention, similarly to the third aspect, since temperature elevation of the power storage sections due to heat generation of the adjacent power storage sections can be suppressed, reduction of life and deterioration of charge/discharge characteristics of storage batteries caused by heat generation can be suppressed. Moreover, according to the fourth aspect of the present invention, since for the plurality of power storage section groups, all the power storage sections are to be evenly discharged by selectively and sequentially switching the power storage section groups to be discharged, specific power storage sections do not only result in convergent heat generation, which can further effectively suppress temperature elevation of the power storage sections.

### Advantageous Effects of the Invention

According to the present invention, an effect that a power storage system which can suppress reduction of life and deterioration of charge/discharge characteristics of storage batteries can be provided can be achieved.

### Brief Description of the Drawings

FIG. 1 is a schematic diagram showing a configuration of a power storage system according to the present invention;
FIG. 2 is an example of group partitioning of a plurality of power storage sections, and shows power storage sections categorized as a first power storage section group with thick lines;
FIG. 3 is an example of group partitioning of the plurality of power storage sections, and shows power storage sections categorized as a second power storage section group with thick lines; and
FIG. 4 is an example of group partitioning of the plurality of power storage sections, and shows power storage sections categorized as a third power storage section group with thick lines.

### Mode for Carrying out the Invention

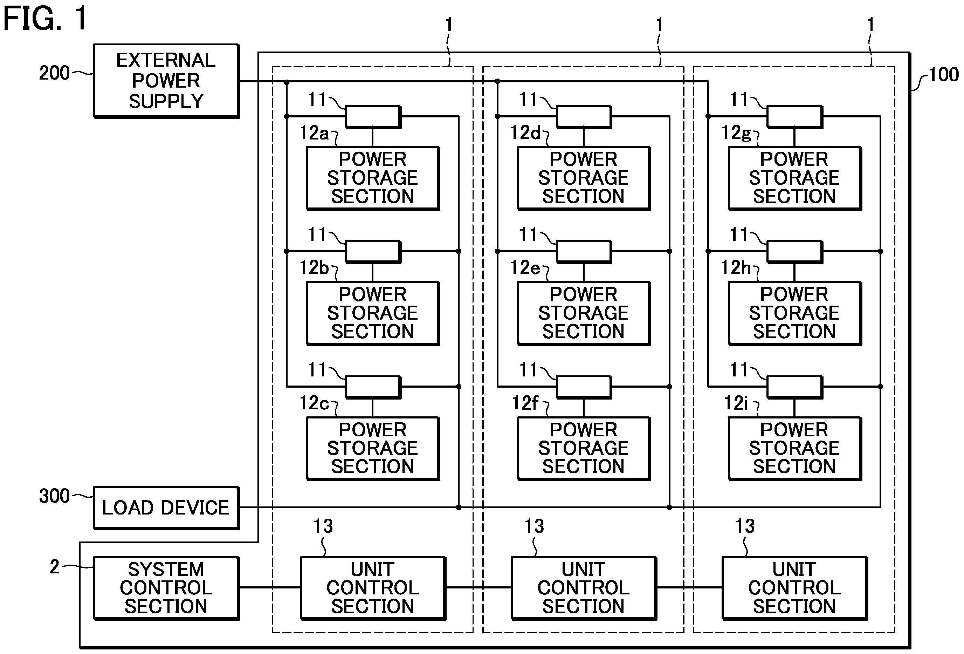

Hereafter, embodiments of the present invention are described with reference to the drawings. FIG. 1 is a schematic diagram showing a configuration of a power storage system according to the present invention. A power storage system 100 includes a plurality of power storage units 1 and a system control section 2. The power storage units 1 include a plurality of charge/discharge circuits 11, a plurality of power storage sections 12 (12a to 12i), and a plurality of unit control sections 13.

The power storage unit 1 receives electric power supplied from an external power supply 200, supplies the received power to a load device 300, and supplies it to the plurality of charge/discharge circuits 11. The external power supply 200 may be, for example, a commercial power supply or may be a power supply originated from natural energy such as sunlight and wind power.

The charge/discharge circuits 11 as "charge/discharge sections" are individually connected to the corresponding power storage sections 12 on a one-by-one basis, and individually charge/discharge the parallelly disposed plurality of power storage sections 12. More specifically, for example, in normal operation, the charge/discharge circuit 11 charges the corresponding power storage section 12 with electric power supplied from the external power supply 200 in accordance with the state of charge of the corresponding power storage section 12. Moreover, when electric power is not supplied from the external power supply 200, for example, in blackout, the charge circuit 11 discharges electric power stored in the power storage section 12 to the load device 300.

The power storage section 12 is a rechargeable/dischargeable power storage module configured to include one or more storage batteries such, for example, as nickel-hydrogen secondary batteries and lithium ion secondary batteries. In the power storage system 100, many plurality of power storage sections 12 are parallelly disposed in the vertical direction, the horizontal direction and the front-rear direction.

The system control section 2 as a "control section" controls the unit control sections 13 individually provided for the plurality of power storage units 1. The unit control section 13 individually controls the plurality of charge/discharge circuits 11 belonging to the same power storage unit 1 as that unit control section 13. Namely, the system control section 2 controls the plurality of charge/discharge circuits 11 via the unit control sections 13 of the respective power storage units 1.

The system control section 2 controls the plurality of charge/discharge circuits 11 such that the power storage sections 12 adjacent to one another in the vertical, horizontal and front-rear directions out of the parallelly disposed plurality of power storage sections 12 are not simultaneously charged/discharged. Thereby, temperature elevation of the power storage sections 12 due to heat generation of the adjacent power storage sections 12 can be suppressed, so that in each power storage section 12, reduction of life and deterioration of charge/discharge characteristic of the storage batteries caused by heat generation can be suppressed.

More specifically, the system control section 2 first partitions the plurality of power storage sections 12 into a plurality of power storage section groups each composed of the power storage sections 12 not adjacent to one another in the vertical, horizontal or front-rear direction. In charging, it charges the plurality of power storage sections 12 by repeating controls of selectively and sequentially charging the plurality of power storage section groups. Moreover, in discharging, it discharges the plurality of power storage sections 12 by repeating controls of selectively and sequentially discharging the plurality of power storage section groups.

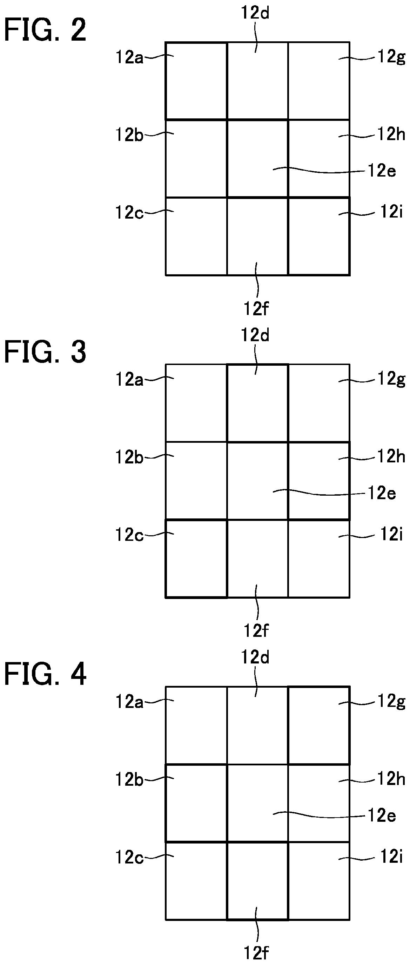

Hereafter, specific description is made with reference to FIG. 2 to FIG. 4.

FIG. 2 is an example of group partitioning of the plurality of power storage sections 12, and shows power storage sections 12 categorized as a first power storage section group with thick lines. FIG. 3 is an example of group partitioning of the plurality of power storage sections 12, and shows power storage sections 12 categorized as a second power storage section group with thick lines. FIG. 4 is an example of group partitioning of the plurality of power storage sections 12, and shows power storage sections 12 categorized as a third power storage section group with thick lines.

In this embodiment, the power storage sections 12a, 12e and 12i are categorized as the first power storage section group (FIG. 2), the power storage sections 12c, 12d and 12h are categorized as the second power storage section group (FIG. 3), and the power storage sections 12b, 12f and 12g are categorized as the third power storage section group (FIG. 4).

In charging the plurality of power storage sections 12, the system control section 2 repeatedly performs controls of sequentially and selectively charging the first to third power storage section groups for fixed time periods. For example, when the first power storage section group is selected and charged, the system control section 2 reports information of the power storage sections 12 (power storage sections 12a, 12e and 12i) categorized as the first power storage section group to the unit control sections 13. Each unit control section 13 reports an instruction of charge permission to the charge/discharge circuit 11 corresponding to the power storage section 12 (power storage section 12a, 12e or 12i) categorized as the first power storage section group out of the plurality of charge/discharge circuits 11 belonging to the same power storage unit 1 as that unit control section 13. Then, the charge/discharge circuit 11 to which the instruction of charge permission is reported charges the corresponding power storage section 12 with electric power supplied from the external power supply 200 in accordance with the state of charge of the corresponding power storage section 12. Thereby, the power storage sections 12 (power storage sections 12a, 12e and 12i) categorized as the first power storage section group are simultaneously charged. Moreover, in this stage, the power storage sections 12 (power storage sections 12c, 12d and 12h) categorized as the second power storage section group, and the power storage sections 12 (power storage sections 12b, 12f and 12g) categorized as the third power storage section group are not charged.

Moreover, for example, when the second power storage section group is selected and charged, the system control section 2 reports information of the power storage sections 12 (power storage sections 12c, 12d and 12h) categorized as the second power storage section group to the unit control sections 13. Each unit control section 13 reports an instruction of charge permission to the charge/discharge circuit 11 corresponding to the power storage section 12 (power storage section 12c, 12d or 12h) categorized as the second power storage section group out of the plurality of charge/discharge circuits 11 belonging to the same power storage unit 1 as that unit control section 13. Then, the charge/discharge circuit 11 to which the instruction of charge permission is reported charges the corresponding power storage section 12 with electric power supplied from the external power supply 200 in accordance with the state of charge of the corresponding power storage section 12. Thereby, the power storage sections 12 (power storage sections 12c, 12d and 12h) categorized as the second power storage section group are simultaneously charged. Moreover, in this stage, the power storage sections 12 (power storage sections 12a, 12e and 12i) categorized as the first power storage section group, and the power storage sections 12 (power storage sections 12b, 12f and 12g) categorized as the third power storage section group are not charged.

Moreover, for example, when the third power storage section group is selected and charged, the system control section 2 reports information of the power storage sections 12 (power storage sections 12b, 12f and 12g) categorized as the third power storage section group to the unit control sections 13. Each unit control section 13 reports an instruction of charge permission to the charge/discharge circuit 11 corresponding to the power storage section 12 (power storage section 12b, 12f or 12g) categorized as the third power storage section group out of the plurality of charge/discharge circuits 11 belonging to the same power storage unit 1 as that unit control section 13. Then, the charge/discharge circuit 11 to which the instruction of charge permission is reported charges the corresponding power storage section 12 with electric power supplied from the external power supply 200 in accordance with the state of charge of the corresponding power storage section 12. Thereby, the power storage sections 12 (power storage sections 12b, 12f and 12g) categorized as the third power storage section group are simultaneously charged. Moreover, in this stage, the power storage sections 12 (power storage sections 12a, 12e and 12i) categorized as the first power storage section group, and the power storage sections 12 (power storage sections 12c, 12d and 12h) categorized as the second power storage section group are not charged.

As described above, for the first to third power storage section groups, all the power storage sections 12 are charged by selectively and sequentially switching the power storage section groups to be charged. In other words, the power storage sections 12 belonging to the same group are simultaneously charged, and the power storage sections 12 belonging to different groups are not simultaneously charged. Further, each of the first to third power storage section groups is composed of the power storage sections 12 not adjacent to one another in the vertical, horizontal or front-rear direction. Therefore, the plurality of power storage sections 12 are to be charged such that the power storage sections 12 adjacent to one another in the vertical, horizontal and front-rear directions are not simultaneously charged.

In this way, according to the present invention, temperature elevation of the power storage sections 12 due to heat generation of the adjacent power storage sections 12 can be suppressed, so that reduction of life and deterioration of charge/discharge characteristics of storage batteries caused by heat generation can be suppressed. Moreover, all the plurality of power storage sections 12 are not to be simultaneously charged, so that peak consumption power in charging can be reduced. Furthermore, for the first to third power storage section groups, all the power storage sections 12 are to be evenly charged by selectively and sequentially switching the power storage section groups to be charged, so that specific power storage sections 12 do not only result in convergent heat generation, which can further effectively suppress temperature elevation of the power storage sections 12.

In discharging the plurality of power storage sections 12, the system control section 2 repeatedly performs controls of sequentially and selectively discharging the first to third power storage section groups for fixed periods. For example, when the first power storage section group is selected and discharged, the system control section 2 reports information of the power storage sections 12 (power storage sections 12a, 12e and 12i) categorized as the first power storage section group to the unit control sections 13. Each unit control section 13 reports an instruction of discharge permission to the charge/discharge circuit 11 corresponding to the power storage section 12 (power storage section 12a, 12e or 12i) categorized as the first power storage section group out of the plurality of charge/discharge circuits 11 belonging to the same power storage unit 1 as that unit control section 13. Then, the charge/discharge circuit 11 to which the instruction of discharge permission is reported discharges the corresponding power storage section 12. Thereby, the power storage sections 12 (power storage sections 12a, 12e and 12i) categorized as the first power storage section group are simultaneously discharged. Moreover, in this stage, the power storage sections 12 (power storage sections 12c, 12d and 12h) categorized as the second power storage section group, and the power storage sections 12 (power storage sections 12b, 12f and 12g) categorized as the third power storage section group are not discharged.

Moreover, for example, when the second power storage section group is selected and discharged, the system control section 2 reports information of the power storage sections 12 (power storage sections 12c, 12d and 12h) categorized as the second power storage section group to the unit control sections 13. Each unit control section 13 reports an instruction of discharge permission to the charge/discharge circuit 11 corresponding to the power storage section 12 (power storage section 12c, 12d or 12h) categorized as the second power storage section group out of the plurality of charge/discharge circuits 11 belonging to the same power storage unit 1 as that unit control section 13. Then, the charge/discharge circuit 11 to which the instruction of discharge permission is reported discharges the corresponding power storage section 12. Thereby, the power storage sections 12 (power storage sections 12c, 12d and 12h) categorized as the second power storage section group are simultaneously discharged. Moreover, in this stage, the power storage sections 12 (power storage sections 12a, 12e and 12i) categorized as the first power storage section group, and the power storage sections 12 (power storage sections 12b, 12f and 12g) categorized as the third power storage section group are not discharged.

Moreover, for example, when the third power storage section group is selected and discharged, the system control section 2 reports information of the power storage sections 12 (power storage sections 12b, 12f and 12g) categorized as the third power storage section group to the unit control sections 13. Each unit control section 13 reports an instruction of discharge permission to the charge/discharge circuit 11 corresponding to the power storage section 12 (power storage section 12b, 12f or 12g) categorized as the third power storage section group out of the plurality of charge/discharge circuits 11 belonging to the same power storage unit 1 as that unit control section 13. Then, the charge/discharge circuit 11 to which the instruction of discharge permission is reported discharges the corresponding power storage section 12. Thereby, the power storage sections 12 (power storage sections 12b, 12f or 12g) categorized as the third power storage section group are simultaneously discharged. Moreover, in this stage, the power storage sections 12 (power storage sections 12a, 12e and 12i) categorized as the first power storage section group, and the power storage sections 12 (power storage sections 12c, 12d and 12h) categorized as the second power storage section group are not discharged.

As described above, for the first to third power storage section groups, all the power storage sections 12 are discharged by selectively and sequentially switching the power storage section groups to be discharged. In other words, the power storage sections 12 belonging to the same group are simultaneously discharged, and the power storage sections belonging to different groups are not simultaneously discharged. Further, each power storage section group of the first to third power storage section groups is composed of the power storage sections 12 not adjacent to one another in the vertical, horizontal or front-rear direction. Therefore, the plurality of power storage sections 12 are to be discharged such that the power storage sections 12 adjacent to one another in the vertical, horizontal and front-rear directions are not simultaneously discharged.

In this way, according to the present invention, temperature elevation of the power storage sections 12 due to heat generation of the adjacent power storage sections 12 can be suppressed, so that reduction of life and deterioration of charge/discharge characteristics of storage batteries caused by heat generation can be suppressed. Moreover, for the first to third power storage section groups, all the power storage sections 12 are to be evenly discharged by selectively and sequentially switching the power storage section groups to be discharged, so that specific power storage sections 12 do not only result in convergent heat generation, which can further effectively suppress temperature elevation of the power storage sections 12.

### Explanation of Reference Signs

- 1: Power storage unit
- 2: System control section
- 11: Charge/discharge circuit
- 12: Power storage section
- 13: Unit control section
- 100: Power storage system
- 200: External power supply
- 300: Load device

## Claims

1. A power storage system (100) comprising:
a plurality of power storage sections (12a-12i) parallelly disposed;
charge/discharge sections (11) that individually charge/discharge the plurality of power storage sections (12a-12i); and
a control section (2, 13) that controls the charge/discharge sections (11), wherein
the control section (2, 13) controls the charge/discharge sections (11) such that the plurality of power storage sections (12a-12i) not adjacent to one another are simultaneously charged, wherein the control section (2, 13) partitions the plurality of power storage sections (12a-12i) into a plurality of power storage section groups each composed of power storage sections (12a-12i) not adjacent to one another and charges all the power storage section groups by repeatedly performing charging controls for fixed time periods.

2. The power storage system (100) according to claim 1, wherein the control section (2, 13) partitions the plurality of power storage sections (12a-12i) into a plurality of power storage section groups each composed of power storage sections (12a-12i) not adjacent to one another, repeats controls of selectively and sequentially charging the plurality of power storage section groups and controls the charge/discharge sections such that the power storage sections (12a-12i) belonging to the same group are simultaneously charged.

3. A power storage system (100) comprising:
a plurality of power storage sections (12a-12i) parallelly disposed;
charge/discharge sections (11) that individually charge/discharge the plurality of power storage sections (12a-12i); and
a control section (2, 13) that controls the charge/discharge sections (11), wherein
the control section (2, 13) controls the charge/discharge sections (11) such that the plurality of power storage sections (12a-12i) not adjacent to one another are simultaneously discharged, wherein the control section (2, 13) partitions the plurality of power storage sections (12a-12i) into a plurality of power storage section groups each composed of power storage sections (12a-12i) not adjacent to one another and discharges all the power storage section groups by repeatedly performing discharging controls for fixed time periods.

4. The power storage system (100) according to claim 3, wherein the control section (2, 13) partitions the plurality of power storage sections (12a-12i) into a plurality of power storage section groups each composed of power storage sections (12a-12i) not adjacent to one another, repeats controls of selectively and sequentially discharging the plurality of power storage section groups and controls the charge/discharge sections such that the power storage sections (12a-12i) belonging to the same group are simultaneously discharged.

## Patentansprüche

1. Energiespeichersystem (100), umfassend:
mehrere Energiespeicherabschnitte (12a - 12i), die parallel angeordnet sind;
Lade-/Entladeabschnitte (11), die einzeln die mehreren Energiespeicherabschnitte (12a - 12i) laden/entladen; und
einen Steuerabschnitt (2, 13), der die Lade-/Entladeabschnitte (11) steuert, wobei
der Steuerabschnitt (2, 13) die Lade-/Entladeabschnitte (11) derart steuert, dass die mehreren Energiespeicherabschnitte (12a - 12i), die nicht aneinander angrenzen, gleichzeitig geladen werden, wobei der Steuerabschnitt (2, 13) die mehreren Energiespeicherabschnitte (12a - 12i) in mehrere Energiespeicherabschnittgruppen unterteilt, die sich jeweils aus nicht aneinander angrenzenden Energiespeicherabschnitten (12a - 12i) zusammensetzen und alle die Energiespeicherabschnittgruppen dadurch lädt, dass wiederholt Ladesteuerungen für feste Zeiträume durchgeführt werden.

2. Energiespeichersystem (100) nach Anspruch 1, wobei der Steuerabschnitt (2, 13) die mehreren Energiespeicherabschnitte (12a - 12i) in mehrere Energiespeicherabschnittgruppen unterteilt, die sich jeweils aus nicht aneinander angrenzenden Energiespeicherabschnitten (12a - 12i) zusammensetzen, Steuerungen des selektiven und sequenziellen Ladens der mehreren Energiespeicherabschnittgruppen wiederholt, und die Lade-/Entladeabschnitte derart steuert, dass die Energiespeicherabschnitte (12a - 12i), die zur selben Gruppe gehören, gleichzeitig geladen werden.

3. Energiespeichersystem (100), umfassend:
mehrere Energiespeicherabschnitte (12a - 12i), die parallel angeordnet sind;
Lade-/Entladeabschnitte (11), die einzeln die mehreren Energiespeicherabschnitte (12a - 12i) laden/entladen; und
einen Steuerabschnitt (2, 13), der die Lade-/Entladeabschnitte (11) steuert, wobei
der Steuerabschnitt (2, 13) die Lade-/Entladeabschnitte (11) derart steuert, dass die mehreren Energiespeicherabschnitte (12a - 12i), die nicht aneinander angrenzen, gleichzeitig entladen werden, wobei der Steuerabschnitt (2, 13) die mehreren Energiespeicherabschnitte (12a - 12i) in mehrere Energiespeicherabschnittgruppen unterteilt, die sich jeweils aus nicht aneinander angrenzenden Energiespeicherabschnitten (12a - 12i) zusammensetzen und alle die Energiespeicherabschnittgruppen dadurch entlädt, dass wiederholt Entladesteuerungen für feste Zeiträume durchgeführt werden.

4. Energiespeichersystem (100) nach Anspruch 3, wobei der Steuerabschnitt (2, 13) die mehreren Energiespeicherabschnitte (12a - 12i) in mehrere Energiespeicherabschnittgruppen unterteilt, die sich jeweils aus nicht aneinander angrenzenden Energiespeicherabschnitten (12a - 12i) zusammensetzen, Steuerungen des selektiven und sequenziellen Entladens der mehreren Energiespeicherabschnittgruppen wiederholt, und die Lade-/Entladeabschnitte derart steuert, dass die Energiespeicherabschnitte (12a - 12i), die zur selben Gruppe gehören, gleichzeitig entladen werden.

## Revendications

1. Système de stockage d'énergie (100) comprenant :
une pluralité de sections de stockage d'énergie (12a - 12i) disposées en parallèle ;
des sections de charge/décharge (11) qui chargent/déchargent individuellement la pluralité de sections de stockage d'énergie (12a - 12i) ; et
une section de commande (2, 13) qui commande les sections de charge/décharge (11), sachant que
la section de commande (2, 13) commande les sections de charge/décharge (11) de telle sorte que la pluralité de sections de stockage d'énergie (12a - 12i) qui ne sont pas adjacentes les unes aux autres soient chargées simultanément, sachant que la section de commande (2, 13) divise la pluralité de sections de stockage d'énergie (12a - 12i) en une pluralité de groupes de sections de stockage d'énergie composés chacun de sections de stockage d'énergie (12a - 12i) qui ne sont pas adjacentes les unes aux autres et charge tous les groupes de sections de stockage d'énergie en effectuant de manière répétée des commandes de charge pendant des périodes fixes.

2. Le système de stockage d'énergie (100) selon la revendication 1,
sachant que la section de commande (2, 13) divise la pluralité de sections de stockage d'énergie (12a - 12i) en une pluralité de groupes de sections de stockage d'énergie composés chacun de sections de stockage d'énergie (12a - 12i) qui ne sont pas adjacentes les unes aux autres, répète des commandes de charge sélective et séquentielle de la pluralité de groupes de sections de stockage d'énergie et commande les sections de charge/décharge de telle sorte que les sections de stockage d'énergie (12a - 12i) faisant partie du même groupe soient chargées simultanément.

3. Système de stockage d'énergie (100) comprenant :
une pluralité de sections de stockage d'énergie (12a - 12i) disposées en parallèle ;
des sections de charge/décharge (11) qui chargent/déchargent individuellement la pluralité de sections de stockage d'énergie (12a - 12i) ; et
une section de commande (2, 13) qui commande les sections de charge/décharge (11), sachant que
la section de commande (2, 13) commande les sections de charge/décharge (11) de telle sorte que la pluralité de sections de stockage d'énergie (12a - 12i) qui ne sont pas adjacentes les unes aux autres soient déchargées simultanément, sachant que la section de commande (2, 13) divise la pluralité de sections de stockage d'énergie (12a - 12i) en une pluralité de groupes de sections de stockage d'énergie composés chacun de sections de stockage d'énergie (12a - 12i) qui ne sont pas adjacentes les unes aux autres et décharge tous les groupes de sections de stockage d'énergie en effectuant de manière répétée des commandes de décharge pendant des périodes fixes.

4. Le système de stockage d'énergie (100) selon la revendication 3,
sachant que la section de commande (2, 13) divise la pluralité de sections de stockage d'énergie (12a - 12i) en une pluralité de groupes de sections de stockage d'énergie composés chacun de sections de stockage d'énergie (12a - 12i) qui ne sont pas adjacentes les unes aux autres, répète des commandes de décharge sélective et séquentielle de la pluralité de groupes de sections de stockage d'énergie et commande les sections de charge/décharge de telle sorte que les sections de stockage d'énergie (12a - 12i) faisant partie du même groupe soient déchargées simultanément.
